# EUROPEAN PATENT APPLICATION

(11) **EP 4 342 724 A1**
(43) Date of publication of application: **27.03.2024**
(21) Application number: 22875152.5
(22) Date of filing: 30.09.2022
(51) Int. Cl.: B60L 53/62

(54) **VEHICLE AND CHARGING METHOD THEREFOR, AND STORAGE MEDIUM**

(30) Priority: 30.09.2021 CN 202111164427
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); LIU, Junhua, Shenzhen, Guangdong 518118 (CN); AN, Fengjun, Shenzhen, Guangdong 518118 (CN); WEN, Qi, Shenzhen, Guangdong 518118 (CN)
(74) Representative: Arnold & Siedsma
(86) International application number: PCT/CN2022/123160
(87) International publication number: WO 2023/051771

(57) **Abstract**

A vehicle and a charging method therefor and a storage medium are provided. The method for charging a vehicle includes the following steps. A first voltage of a charging port of a vehicle is obtained. A target buck value is determined based on the first voltage. A voltage on a buck side of a buck-boost module of the vehicle is adjusted based on the target buck value. The target buck value is sent to a charging pile to enable the charging pile to determine an output voltage based on the target buck value. A charging demand current of the vehicle is increased to a maximum allowable charging current of the vehicle after the vehicle enters a charging process.

## Description

### CROSS REFERENCE TO RELATED APPLICATIONS

The present disclosure claims priority to Chinese Patent Application No. 202111164427.1, filed on September 30, 2021 and entitled "VEHICLE AND CHARGING METHOD THEREFOR AND STORAGE MEDIUM". The entire content of the above-referenced application is incorporated herein by reference.

### FIELD

The present disclosure relates to the field of vehicle charging technologies, and more specifically, to a vehicle and a charging method therefor and a storage medium.

### BACKGROUND

In order to adapt to different voltage platforms, a charging switching method and system for an electric vehicle and a vehicle are provided in the related art. The method includes the following steps. A first charging voltage and a second charging voltage of a vehicle are obtained when the vehicle shakes hands with a target charging pile for charging. The first charging voltage is a maximum charging voltage under a first charging circuit. The second charging voltage is a maximum charging voltage under a second charging circuit. A first output voltage is obtained after the handshake succeeds. A charging voltage of the vehicle is switched to the first charging voltage when the first output voltage is equal to the first charging voltage. A first instruction is sent to the target charging pile. The charging voltage of the vehicle is switched to the second charging voltage when the first output voltage is equal to the second charging voltage and a second output voltage is equal to the first output voltage. A second instruction is sent to the target charging pile.

However, although the above charging technology can adapt to different voltage platforms, two or more charging circuits need to be arranged, resulting in a relatively high cost of a hardware device. Moreover, the charging voltage is determined only after the vehicle successfully shakes hands with the target charging pile for charging, which may result in a timeout of the subsequent charging process.

### SUMMARY

The present disclosure is intended to resolve one of the technical problems in the related art at least to some extent. Therefore, the present disclosure provides a vehicle and a charging method therefor and a storage medium.

According to a first aspect, the present disclosure provides a method for charging a vehicle, including the following steps. A first voltage of a charging port of a vehicle is obtained. A target buck value is determined based on the first voltage. A voltage on a buck side of a buck-boost module of the vehicle is adjusted based on the target buck value. The target buck value is sent to a charging pile to enable the charging pile to determine an output voltage based on the target buck value. A charging demand current of the vehicle is increased to a maximum allowable charging current of the vehicle after the vehicle enters a charging process.

According to a second aspect, the present disclosure provides a storage medium, storing a computer program. The computer program, when executed by a processor, implements the above method for charging a vehicle.

According to a third aspect, the present disclosure provides a vehicle, including an electronic device. The electronic device includes a memory, a processor, and a computer program stored in the memory. The computer program, when executed by the processor, implements the above method for charging a vehicle.

According to the vehicle and the charging method therefor and the storage medium in the embodiments of the present disclosure, the target buck value is determined based on the voltage of the charging port, and the target buck value is sent to a buck-boost module and the charging pile. Therefore, a voltage output capacity of the charging pile may be determined before the charging pile sends a maximum output capacity message, an initial target buck value of the buck-boost module may be increased, and a low-power charging time in a boost stage may be shortened or canceled. The charging power may be improved by increasing the charging voltage on a buck side of the buck-boost module.

Additional aspects and advantages of the present disclosure are to be partially given in the following description, and partially become apparent in the following description or understood through the practice of the present disclosure.

### BRIEF DESCRIPTION OF THE DRAWINGS

FIG. 1 is a schematic structural diagram of a vehicle charging system according to an embodiment of the present disclosure;
FIG. 2 is a flowchart of switching of a charging mode of a charging pile according to an example of the present disclosure;
FIG. 3 is a schematic structural diagram of a vehicle charging system according to another embodiment of the present disclosure;
FIG. 4 is a schematic structural diagram of a vehicle charging system according to still another embodiment of the present disclosure;
FIG. 5 is a flowchart of a method for charging a vehicle according to an embodiment of the present disclosure;
FIG. 6 is a flowchart of information interaction in a vehicle charging system according to an embodiment of the present disclosure;
FIG. 7 is a flowchart of a method for charging a vehicle according to a specific embodiment of the present disclosure;
FIG. 8 is a flowchart of a method for charging a vehicle according to another specific embodiment of the present disclosure;
FIG. 9 is a flowchart of a method for charging a vehicle according to still another specific embodiment of the present disclosure; and
FIG. 10 is a structural block diagram of a vehicle according to an embodiment of the present disclosure.

### DETAILED DESCRIPTION

Embodiments of the present disclosure are described in detail below, and examples of the embodiments are shown in the accompanying drawings, where the same or similar elements or elements having the same or similar functions are represented by the same or similar reference numerals throughout the description. The embodiments described below with reference to the accompanying drawings are exemplary and used only for explaining the present disclosure, and should not be construed as a limitation on the present disclosure.

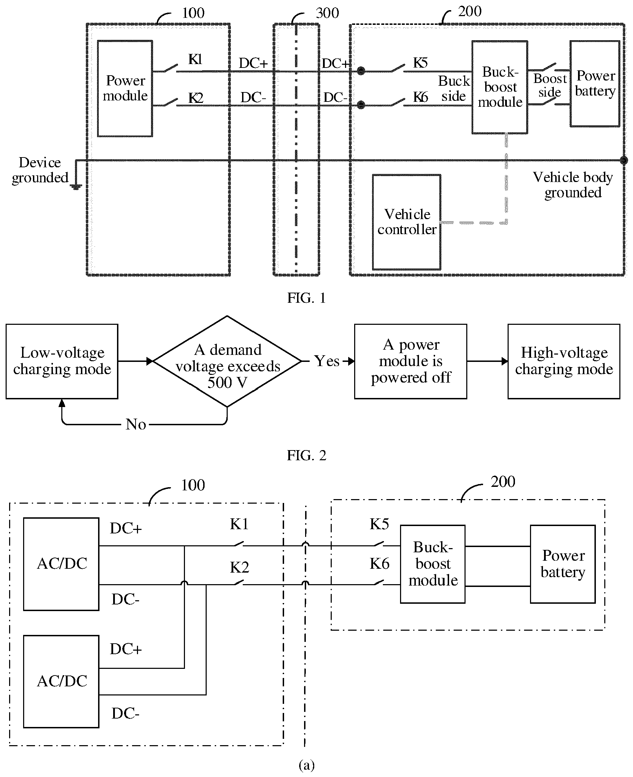

Currently, multiple piezoelectric charging piles (direct current charging piles) and rechargeable vehicles of various voltages exist in the market. In order to satisfy an applicable range of the vehicles to the charging piles, a buck-boost module may be added to a vehicle 200. As shown in FIG. 1, the vehicle 200 may determine a final charging voltage based on a maximum allowable output voltage of a charging pile 100 in a charging configuration stage.

During charging, the vehicle is charged at an initial charging demand current in the charging stage after receiving a CML message including the maximum allowable output voltage sent by the charging pile, so that a voltage on a buck side is gradually increased. This process may last for 2-3 min, which may cause customer complaints. Moreover, some charging piles may have a situation of falsely sending the maximum allowable output voltage (actually 500 V, but the CML sends a voltage of 750 V). In this case, the falsely sent maximum allowable output voltage may cause the charging to stop abnormally. Therefore, in the related art, it is proposed that during boosting, it is determined that an output current of the charging pile is reduced (actually reduced to 0 A, and the vehicle detects that a value of a filtered current may be slightly larger, for example, 8 A), to resolve the problem that the charging pile falsely sends the maximum allowable output voltage by adopting a manner of reducing the voltage on the buck side. However, the method may cause erroneous determination, and may cause the vehicle to be charged at a lower charging voltage on a high-voltage charging pile, resulting in low charging power.

During charging of the vehicle by using the charging pile, three main situations that cause the charging current to decrease (actually reduced to 0 A, the value of the filtered current detected by the vehicle may be larger, such as 5 to 8 A) exist as follows.

In a first situation, for a charging pile 100 above 500 V, when an output voltage of the charging pile 100 or a charging demand voltage of the vehicle 200 is greater than a specific value (such as 500 V), a power module of the charging pile 100 needs to be switched from a low-voltage charging mode to a high-voltage charging mode. The power module is turned off once, causing the output current of the charging pile 100 to be reduced to 0 A, as shown in FIG. 2.

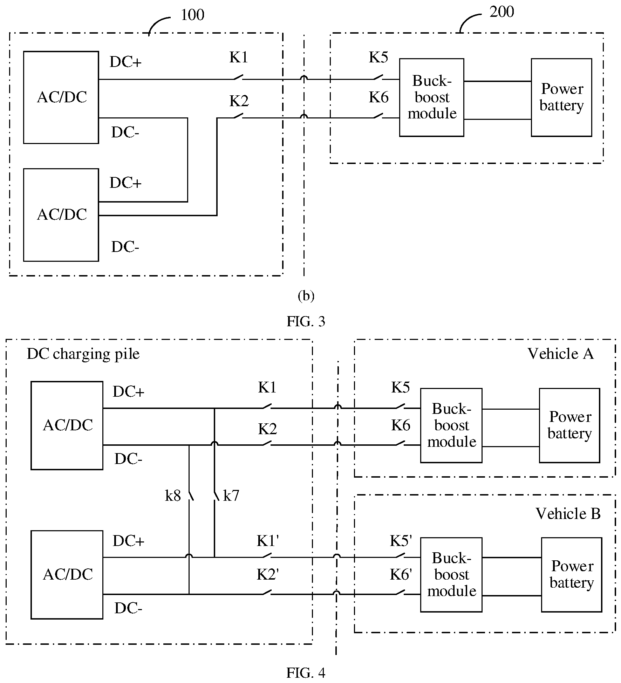

In a second situation, for the charging pile 100 including multiple power modules, output voltages of the power modules are all low voltages (such as less than 500 V). In order to enable the vehicle 200 of a high voltage (greater than 500 V) to be charged normally, when the charging demand voltage or charging voltage of the vehicle 200 is greater than a specific value (such as 500 V), as shown in FIG. 3, the charging pile 100 requires two series power modules in place of two parallel power modules, to increase an output voltage range of the charging pile 100. The power module of the charging pile 100 needs to be turned off during switching, and the charging current is to be reduced to 0 A.

In a third situation, for a dual-gun direct current charging pile above 500 V including intermediate contactors K7 and K8, as shown in FIG. 4, when a vehicle A uses a gun A for charging, the intermediate contactors K7 and K8 are closed, and two sets of power modules simultaneously charge the vehicle A. When a vehicle B uses a gun B for charging, the charging pile turns off the power module, the intermediate contactors K7 and K8 are opened, and the two sets of power modules respectively charge the two vehicles. The output current of the charging pile 100 may be reduced to 0 A.

In order to avoid erroneously determining the above three situations as a situation in which the charging pile falsely sends the maximum output voltage of the CML and shortens or cancels the boost time of the vehicle, the present disclosure provides a vehicle and a charging method therefor and a storage medium. A vehicle and a charging method therefor and a storage medium in the embodiments of the present disclosure are described below with reference to the accompanying drawings.

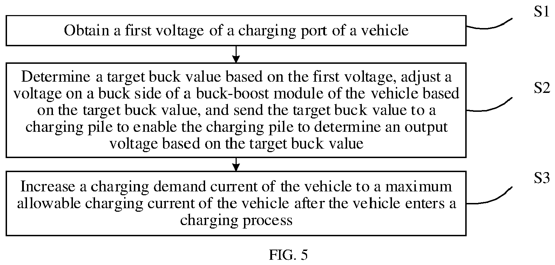

FIG. 5 is a flowchart of a method for charging a vehicle according to an embodiment of the present disclosure.

As shown in FIG. 5, the method for charging a vehicle includes the following steps.

S1: A first voltage of a charging port of a vehicle is obtained.

As an example, the first voltage Uport may be a maximum voltage of the charging port before transmission of a handshake message (including a CHM handshake message and a BHM handshake message) between the vehicle and a charging pile stops.

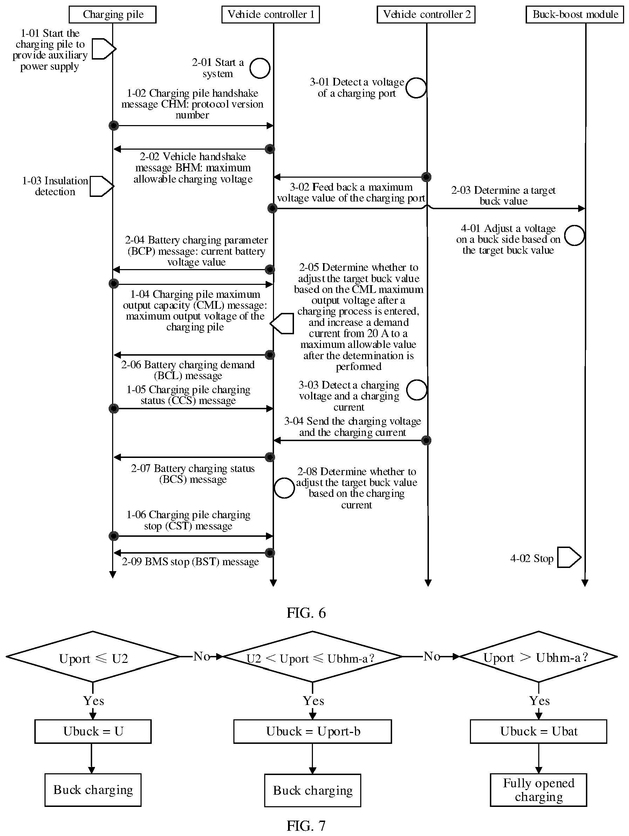

Specifically, as shown in FIG. 6, after a charging gun of the charging pile (which may be a direct current charging pile) is connected to the vehicle, the charging pile is started. The charging pile provides auxiliary power supply, and the vehicle is started by a wake-up system. A vehicle controller 2 of the vehicle continuously detects the voltage at the charging port. The charging pile sends the CHM handshake message. A vehicle controller 1 replies to the BHM handshake message (including a maximum allowable charging voltage of the vehicle). According to requirements in B.3.3 of GB/T 18487.1-2015 "Electric Vehicle Conductive Charging System-Part 1: General Requirements", after the vehicle replies to the BHM handshake message, the charging pile needs to perform insulation detection. The charging pile adjusts the output voltage of the power module to min {Ubhm, Ucml}, where Ubhm is a maximum allowable charging voltage of the vehicle, and Ucml is a maximum allowable output voltage of the charging pile. Before the transmission of the handshake message stops, a maximum voltage may be obtained from all obtained voltages of the charging port, that is, the first voltage.

The vehicle controller 1 and the vehicle controller 2 may form a BMS (Battery Management System) of the vehicle.

S2: A target buck value is determined based on the first voltage, a voltage on a buck side of a buck-boost module of the vehicle is adjusted based on the target buck value, and the target buck value is sent to a charging pile to enable the charging pile to determine an output voltage based on the target buck value.

Specifically, if the voltage on the buck side of the buck-boost module is determined after the maximum allowable output voltage is received, the subsequent charging process may expire. Therefore, in this embodiment of the present disclosure, an initial voltage on the buck side is determined in advance based on the first voltage of the charging port, that is, a target buck value Ubuck. Referring to FIG. 6, after the target buck value is determined, the target buck value is sent to the buck-boost module, and the voltage on the buck side of the buck-boost module is adjusted to the target buck value, to perform boost charging, buck charging, or fully opened charging. The fully opened charging is an operation mode of the buck-boost module. In the operation mode, the buck-boost module does not perform voltage switching, which is equivalent to direct charging of a power battery by a direct current charging pile. In addition, the target buck value Ubuck is used as the power battery voltage (that is, a current voltage of the power battery) in a BCP message, and is sent to the charging pile through the BCP message, so that the charging pile determines the output voltage based on the target buck value Ubuck.

S3: A charging demand current of the vehicle is increased to a maximum allowable charging current of the vehicle after the vehicle enters a charging process.

Specifically, after the vehicle enters the charging process, the charging demand current of the vehicle may be directly increased to the maximum allowable charging current of the vehicle, to cancel a small-current charging time and increase the charging power. It may be further determined whether to adjust the target buck value. If the adjustment is needed, the charging demand current of the vehicle is increased to the maximum allowable charging current of the vehicle after the target buck value is determined. If the adjustment is not needed, the charging demand current of the vehicle is directly increased to the maximum allowable charging current of the vehicle. Therefore, the charging pile may operate in a maximum output voltage state, and the charging power can be increased.

Therefore, according to the method for charging a vehicle in this embodiment of the present disclosure, the target buck value is determined based on the voltage of the charging port, and the target buck value is sent to the buck-boost module and the charging pile respectively. In this way, a voltage output capacity of the charging pile may be determined in advance, and an initial target buck value of the buck-boost module may be increased, thereby reducing or avoiding a timeout of the charging process, shortening or canceling a small-power charging time in the boost stage, and increasing the charging power.

In this embodiment of the present disclosure, as shown in FIG. 6, after the vehicle sends the BCP message to the charging pile, the charging pile may send the CML message including the maximum allowable output voltage to the vehicle. The vehicle controller 1 may determine whether to continuously adjust the target buck value after entering the charging process based on the maximum allowable output voltage in the CML message. If the adjustment is not needed, the charging demand current is increased from an initial charging demand current such as 20 A to the maximum allowable charging current. If the adjustment is needed, the initial charging demand current such as 20 A remains unchanged, and the target buck value is increased. After the target buck value is determined, the charging demand current is increased from the initial charging demand current such as 20 A to the maximum allowable charging current.

As shown in FIG. 6, after the processing of the CML message is completed, the vehicle may send a battery charging demand (BCL) message to the charging pile. After the charging pile receives the BCL message, a charging pile charging status (CCS) message may be sent to the vehicle. During the charging, the vehicle detects a charging current and a charging voltage, and send a battery charging status (BCS) message to the charging pile. The vehicle further determines whether to adjust the target buck value based on the charging current. When the charging needs to be ended, the charging pile sends a charger stop (CST) message to the vehicle. The vehicle may send a battery stop (BST) message to the charging pile and control the buck-boost module to stop charging after receiving the CST message.

In some embodiments of the present disclosure, that a target buck value is determined based on the first voltage includes the following steps. The maximum allowable charging voltage and a power battery voltage (that is, a current voltage of a power battery) of the vehicle are obtained. It is determined that the target buck value is a first target voltage when the first voltage is less than or equal to a first preset voltage, to perform buck charging. The first preset voltage is less than a first difference. The first difference is a difference between the maximum allowable charging voltage and a first preset value. It is determined that the target buck value is a second difference when the first voltage is greater than the first preset voltage and less than or equal to the first difference, to perform the buck charging. The second difference is a difference between the first voltage and a second preset value. It is determined that the target buck value is the power battery voltage when the first voltage is greater than the first difference, to perform fully opened charging.

Specifically, as shown in FIG. 7, when the first voltage Uport ≤ U2 (that is, the first preset voltage, such as U2 = 360 V), the vehicle controller 1 determines that the target buck value is a first target voltage U, and sends U to the buck-boost module and the charging pile respectively, to perform the buck charging. U2 < Ubhm-a (that is, the first difference). After the charging stage is entered, the charging demand current may be directly increased to the maximum allowable charging current of the vehicle, to cancel a small-current charging time during boosting and increase the charging power.

When U2< Uport ≤ Ubhm-a, the vehicle controller 1 determines that the target buck value is Uport-b (that is, the second difference, where a value of b may be 30 V), and sends Uport-b to the buck-boost module and the charging pile respectively, to perform the buck charging. After the charging stage is entered, the charging demand current may be directly increased to the maximum allowable charging current of the vehicle, which cancels a small-current charging time during boosting and increases the charging power.

When Uport > Ubhm-a, the vehicle controller 1 determines that the target buck value is a power battery voltage Ubat (that is, the current voltage of the power battery), and sends Ubat to the buck-boost module and the charging pile respectively. In this case, the buck-boost module of the vehicle may be controlled to be fully opened for fully opened charging. After the charging stage is entered, the charging demand current may be directly increased to the maximum allowable charging current of the vehicle, which cancels a small-current charging time during boosting and increases the charging power.

In some embodiments of the present disclosure, before the charging demand current of the vehicle is increased to the maximum allowable charging current of the vehicle, the method further includes the following steps. A maximum allowable output voltage Ucml of the charging pile and the power battery voltage Ubat and a maximum allowable charging voltage Ubhm of the vehicle are obtained. The target buck value is increased to a smaller one min {Ucml-e, Ubat-c} of a third difference and a fourth difference when the maximum allowable output voltage is less than a smaller one of the maximum allowable charging voltage and a preset voltage threshold Ucml < min {Ubhm, 750 V}, to perform buck charging. The third difference is a difference between the power battery voltage and a fourth preset value c. The fourth difference is a difference between the maximum allowable output voltage and a fifth preset value e. The target buck value is increased to the power battery voltage when the maximum allowable output voltage is greater than or equal to the smaller one of the maximum allowable charging voltage and the preset voltage threshold Ucml ≥ min {Ubhm, 750 V}, to perform fully opened charging.

It should be noted that, when whether to adjust the target buck value is determined based on the Ucml, a precondition is that the target buck value determined based on the first voltage is not the voltage for controlling the buck-boost module to perform the fully opened charging.

Further, the method for charging a vehicle may further include the following steps. A charging current of the vehicle is obtained. The target buck value is adjusted based on the charging current.

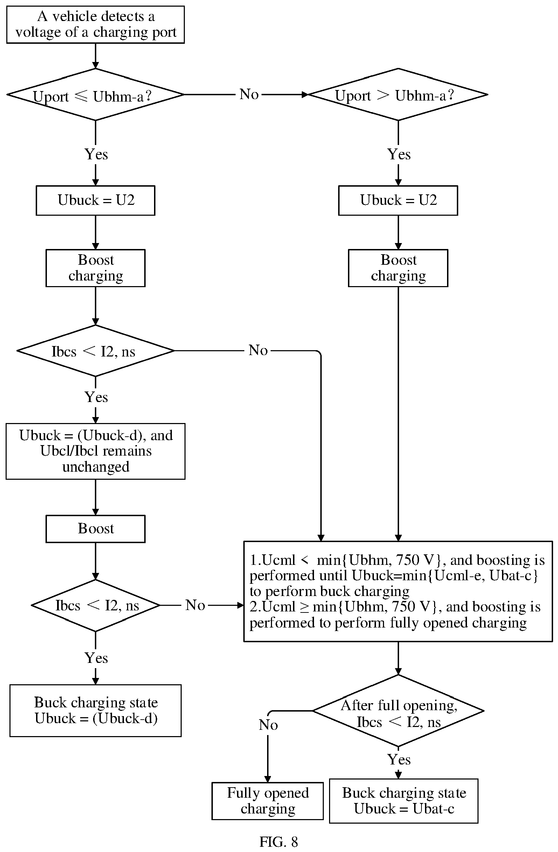

In this embodiment, as a feasible implementation, as shown in FIG. 8, that a target buck value is determined based on the first voltage may include the following steps. It is determined that the target buck value is a first preset voltage when the first voltage is less than or equal to a first difference, to perform boost charging. The first preset voltage is less than the first difference. The first difference is a difference between the maximum allowable charging voltage and a first preset value. It is determined that the target buck value is the first preset voltage when the first voltage is greater than the first difference, to perform the boost charging.

In this implementation, as shown in FIG. 8, when the first voltage is less than or equal to the first difference, that the target buck value is adjusted based on the charging current may include the following steps. The target buck value is reduced by a third preset value to obtain a first target value in a case that the charging current being less than a first preset current occurs and lasts for a first preset time. A ratio of a charging demand voltage to the charging demand current of the vehicle is maintained unchanged. The target buck value is increased according to a preset rule when the charging current is greater than a second preset current after the target buck value is reduced to the first target value, to perform the boost charging again. A current target buck value is reduced by the third preset value in a case that the charging current being less than the first preset current again occurs and lasts for the first preset time after the boost charging is performed again.

The preset rule may be to increase the target buck value by a preset step, for example, adjust the target buck value every second preset time to increase the preset step; or may be to increase the target buck value by a preset curve, for example, linearly increase the target buck value.

In this implementation, after the fully opened charging is performed, in a case that the charging current being less than the first preset current occurs and lasts for the first preset time, the target buck value is reduced to the third difference.

It should be noted that, in this implementation, only when the first voltage Uport is greater than the first difference Ubhm-a, the first voltage may be directly increased to a fully opened state. During boosting, it is not necessary to determine whether the target buck value needs to be adjusted based on the charging current, that is, the voltage on the buck side of the buck-boost module is adjusted.

Specifically, as shown in FIG. 8, as an example, when Uport ≤ Ubhm-a, the vehicle controller 1 determines that the target buck value is U2 (that is, the first preset voltage, U2 < Ubhm-a), and sends U2 to the buck-boost module and the charging pile respectively, to perform the boost charging.

In this example, as a first implementation, after the charging process is entered, if Ucml < min {Ubhm, U0}, U0 is the preset voltage threshold, and the value may be 750 V, the voltage on the buck side is increased until Ubuck = min {Ucml-e, Ubat-c}, a buck charging state is maintained, and the charging demand current is increased to the maximum allowable charging current of the vehicle. If Ucml ≥ min {Ubhm, U0}, the voltage on the buck side is increased to the power battery voltage Ubat to enter a fully opened charging state, and the charging demand current is increased to the maximum allowable charging current of the vehicle. After the fully opened charging, a charging current Ibcs of the vehicle is obtained. In a case that Ibcs < I1 occurs and lasts for ns, the voltage on the buck side is adjusted to Ubuck = Ubat-c, otherwise the fully opened charging is maintained.

As a second implementation, after the charging process is entered, the charging current Ibcs of the vehicle is obtained. During the boosting, in a case that Ibcs < I1 (that is, the first preset current, such as 5 to 8 A) occurs and lasts for the first preset time ns, the voltage on the buck side is adjusted to Ubuck = Ubuck-d, and a ratio Ubcl/Ibcl of the charging demand voltage of the vehicle to the charging demand current remains unchanged. When the charging current is greater than a second preset voltage I2 (I2 > I1), the voltage on the buck side is increased based on the preset step, to perform the boost charging again. In a case that Ibcs < I1 occurs and lasts for ns, a current voltage on the buck side is adjusted to Ubuck = Ubuck-d, the voltage on the buck side of the vehicle remains unchanged, and the charging demand current is increased to the maximum allowable charging current of the vehicle until the end of charging.

In this example, it should be noted that, the second implementation may be performed first. In the second implementation, if a condition that Ibcs being less than I1 occurs and lasts for ns is not satisfied, the first implementation is performed. Alternatively, the first implementation may be performed first. After the voltage on the buck side is increased until Ubuck = min {Ucml-e, Ubat-c}, the second implementation may be performed. Certainly, the increasing of the charging demand current to the maximum allowable charging current of the vehicle is performed only once.

As another example, when Uport > Ubhm-a, the vehicle controller 1 determines that the target buck value is U2 (U2 < Ubhm-a), and sends U2 to the buck-boost module and the charging pile respectively, to perform the boost charging. After the charging process is entered, if Ucml < min {Ubhm, 750 V}, the voltage on the buck side is increased until Ubuck = min {Ucml-e, Ubat-c}, the buck charging state is maintained, and the charging demand current is increased to the maximum allowable charging current of the vehicle. If Ucml ≥ min {Ubhm, 750 V}, the voltage on the buck side is increased to the power battery voltage Ubat to enter a fully opened charging state for charging, and the charging demand current is increased to the maximum allowable charging current of the vehicle. After the fully opened charging, in a case that Ibcs < I1 occurs and lasts for ns, the voltage on the buck side is adjusted to Ubuck = Ubat-c, and the buck charging is maintained during the charging.

As another feasible implementation, that a target buck value is determined based on the first voltage may include the following steps. It is determined that the target buck value is a first preset voltage when the first voltage is less than or equal to a second preset voltage, to perform boost charging. The first preset voltage is less than the second preset voltage. It is determined that the target buck value is a smaller one of a second difference and the third difference when the first voltage is greater than the second preset voltage and less than or equal to a first difference, to perform the boost charging. The first difference is a difference between the maximum allowable charging voltage and a first preset value. The second difference is a difference between the first voltage and a second preset value. The third difference is the difference between the power battery voltage and the fourth preset value. It is determined that the target buck value is the power battery voltage when the first voltage is greater than the first difference, to perform fully opened charging.

In the implementation, after the boost charging is performed, that the target buck value is adjusted based on the charging current may include the following steps. The target buck value is reduced by a third preset value d to obtain a second target value in a case that the charging current Ibcs being less than a first preset current occurs and lasts for a first preset time. A ratio Ubcl/Ibcl of a charging demand voltage to the charging demand current of the vehicle is maintained unchanged. The target buck value is increased according to a preset rule when the charging current is greater than a second preset value after the target buck value is reduced to the second target value, to perform the boost charging again. A current target buck value is reduced by the third preset value in a case that the charging current being less than the first preset current occurs and lasts for the first preset time after the boost charging is performed again.

The preset rule may be to increase the target buck value by a preset step, for example, adjust the target buck value every second preset time to increase the preset step; or may be to increase the target buck value by a preset curve, for example, linearly increase the target buck value.

In the implementation, after the fully opened charging is performed, that the target buck value is adjusted based on the charging current may further include the following step. The target buck value is reduced to the third difference in a case that the charging current being less than the first preset current occurs and lasts for the first preset time.

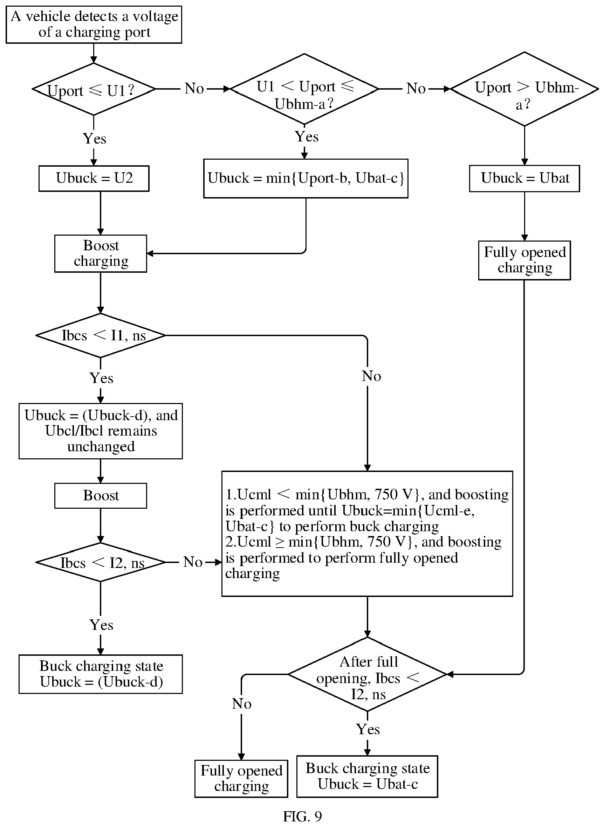

Specifically, as shown in FIG. 9, as an example, when Uport ≤ U1, the vehicle controller 1 determines that the target buck value is U2, and sends U2 to the charging pile and the buck-boost module respectively, to perform the boost charging, where U2 < U1.

In the example, as an implementation, after the charging process is entered, the charging current Ibcs of the vehicle is obtained. In a case that Ibcs < I1 occurs and lasts for ns, the voltage on the buck side is adjusted to Ubuck = Ubuck-d, and Ubcl/Ibcl remains unchanged. When the charging current is greater than I2, the voltage on the buck side is increased according to the preset rule to perform boosting. In a case that Ibcs < I1 occurs and lasts for ns, the voltage on the buck side is adjusted to Ubuck = Ubuck-d. After the charging voltage stabilizes, the charging demand current is increased to the maximum allowable charging current of the vehicle. The vehicle maintains the voltage on the buck side unchanged until the end of charging.

As another implementation, after the charging process is entered, if Ucml < min {Ubhm, 750 V}, the voltage on the buck side is increased until Ubuck = min {Ucml-e, Ubat-c}, the buck charging state is maintained, and the charging demand current is increased to the maximum allowable charging current of the vehicle. If Ucml ≥ min {Ubhm, 750 V}, the voltage on the buck side is increased to the power battery voltage Ubat to enter a fully opened charging state for charging, and the charging demand current is increased to the maximum allowable charging current of the vehicle. After the fully opened charging, in a case that Ibcs < I1 occurs and lasts for ns, the voltage on the buck side is adjusted to Ubuck = Ubat-c. The charging demand current is increased to the maximum allowable charging current of the vehicle after the voltage stabilizes. The buck charging is maintained during the charging.

In this example, it should be noted that, the second implementation may be performed first. In the second implementation, if a condition that Ibcs being less than I1 occurs and lasts for ns is not satisfied, the first implementation is performed. Alternatively, the first implementation may be performed first. After the voltage on the buck side is increased until Ubuck = min {Ucml-e, Ubat-c}, the second implementation may be performed. Certainly, the increasing of the charging demand current to the maximum allowable charging current of the vehicle is performed only once.

As another example, when U1 < Uport ≤ Ubhm-a, the vehicle controller 1 determines that the target buck value is min {Uport-b, Ubat-c}, and sends min {Uport-b, Ubat-c} to the charging pile and the buck-boost module respectively, to perform the boost charging.

In the example, as an implementation, after the charging process is entered, the charging current Ibcs of the vehicle is obtained. In a case that Ibcs < I2 occurs and lasts for ns, the voltage on the buck side is adjusted to Ubuck = Ubuck-d, and Ubcl/Ibcl remains unchanged. The boost charging is performed again after the charging current is greater than I2. After the boost charging is performed, in a case that Ibcs < I1 occurs and lasts for ns, the voltage on the buck side is adjusted to Ubuck = Ubuck-d, the voltage on the buck side of the vehicle remains unchanged, and the charging demand current is increased to the maximum allowable charging current of the vehicle until the end of charging.

As another implementation, after the charging process is entered, if Ucml < min {Ubhm, 750 V}, the voltage on the buck side is increased until Ubuck = min {Ucml-e, Ubat-c}, the buck charging state is maintained, and the charging demand current is increased to the maximum allowable charging current of the vehicle. If Ucml ≥ min {Ubhm, 750 V}, the voltage on the buck side is increased to the power battery voltage Ubat to enter a fully opened charging state for charging, and the charging demand current is increased to the maximum allowable charging current of the vehicle. After the fully opened charging, in a case that Ibcs < I1 occurs and lasts for ns, the voltage on the buck side is adjusted to Ubuck = Ubat-c. The charging demand current is increased to the maximum allowable charging current of the vehicle after the voltage stabilizes. The buck charging is maintained during the charging.

In this example, it should be noted that, the second implementation may be performed first. In the second implementation, if a condition that Ibcs being less than I1 occurs and lasts for ns is not satisfied, the first implementation is performed. Alternatively, the first implementation may be performed first. After the voltage on the buck side is increased until Ubuck = min {Ucml-e, Ubat-c}, the second implementation may be performed. Certainly, the increasing of the charging demand current to the maximum allowable charging current of the vehicle is performed only once.

As still another example, when Uport > Ubhm-a, the vehicle controller 1 determines that the target buck value is the power battery voltage Ubat, and sends Ubat to the charging pile and the buck-boost module respectively, to perform the boost charging. After the charging process is entered, the charging current Ibcs of the vehicle is obtained. In a case that Ibcs < I1 (generally about 8 A) occurs and lasts for ns, the voltage on the buck side is adjusted to Ubuck = Ubat-c. The charging current is increased to the maximum allowable charging current of the vehicle after the charging voltage stabilizes. The buck charging is maintained during the charging.

In addition, it should be noted that, for the first preset value to the fifth preset value (a, b, d, c, and e), values of the first preset voltage U2, the second preset voltage U1, the first target voltage U, the first preset current I1, and the second preset current I2 all may be calibrated according to actual charging demands. The power battery voltage and Ubat are both the current voltages of the power battery.

Based on the above, according to the method for charging a vehicle in the embodiments of the present disclosure, a voltage output capacity of the charging pile may be determined in advance through determination of the voltage of the charging port, which increases the initial target buck value of the buck-boost module, and may shorten a small-power charging time in the boost stage. If the voltage of the charging port satisfies fully opened charging, small-power charging may be canceled, and the demand current is directly increased to the maximum allowable value of the vehicle. The value of the detected voltage of the charging port is used as a condition for a callback, so that accidental triggering of falsely sending the CML can be avoided, which increases the charging voltage value and the charging power. The maximum output voltage value of the charging pile is confirmed through multiple callbacks, which may increase the charging power.

Based on the above method for charging a vehicle, the present disclosure provides a computer-readable storage medium.

In this embodiment, the computer-readable storage medium stores a computer program. The computer program, when executed by a processor, implements the above method for charging a vehicle.

Based on the above method for charging a vehicle, the present disclosure further provides a vehicle.

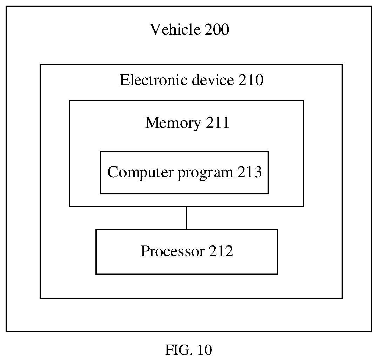

In the embodiment, as shown in FIG. 10, the vehicle 200 includes an electronic device 210. The electronic device 210 includes a memory 211, a processor 212, and a computer program 213 stored in the memory 211. The computer program 213, when executed by the processor 212, implements the above method for charging a vehicle.

It should be noted that, the logic and/or steps shown in the flowchart or described in other manners herein, for example, can be regarded as a sequence list of executable instructions for implementing logical functions, which can be specifically implemented in any computer-readable medium for use by or in combination with an instruction execution system, apparatus, or device (such as a computer-based system, a system including a processor, or other systems that can fetch and execute instructions from an instruction execution system, apparatus, or device). In the context of this specification, the "computer-readable medium" may be any apparatus that may include, store, communicate, propagate, or transmit a program for use by an instruction execution system, apparatus, or device or in combination with the instruction execution system, apparatus, or device. More specific examples (a non-exhaustive list) of the computer-readable storage medium include: an electrical connection portion (electronic device) with one or more wires, a portable computer case (magnetic device), a random access memory (RAM), a read-only memory (ROM), an erasable and editable read-only memory (EPROM or flash memory), an optical fiber device, and a portable compact disk read only memory (CDROM). In addition, the computer-readable medium may even be paper or other suitable medium on which the program can be printed, because the program can be obtained electronically, for example, by optically scanning the paper or other medium, then editing, interpreting, or processing in other suitable manners if necessary, and then stored in a computer memory.

It should be understood that parts of the present disclosure may be implemented by using hardware, software, firmware, or a combination thereof. In the foregoing implementations, multiple steps or methods may be implemented by using software or firmware stored in a memory and executed by a proper instruction execution system. For example, if implementation by hardware is the same as that in another embodiment, the implementation may be performed by any one or a combination of the following technologies known in the art: a discrete logic circuit with a logic gate for implementing a logical function on a data signal, an application-specific integrated circuit with an appropriate combinational logic gate, a programmable gate array (PGA), a field programmable gate array (FPGA), and the like.

In the description of this specification, the description of reference terms such as "one embodiment", "some embodiments", "example", "specific example" or "some examples" means that specific features, structures, materials or characteristics described in combination with the embodiment or example are included in at least one embodiment or example of the present disclosure. In this specification, schematic descriptions of the foregoing terms do not necessarily mean the same embodiment or example. In addition, the described specific features, structures, materials, or characteristics may be combined in a proper manner in any one or more of the embodiments or examples.

In the description of the present disclosure, it should be understood that orientation or position relationships indicated by the terms such as "center", "longitudinal", "lateral", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of description of the present disclosure, rather than indicating or implying that the mentioned apparatus or element needs to have a particular orientation or be constructed and operated in a particular orientation. Therefore, such terms should not be construed as a limitation on the present disclosure.

In addition, terms "first" and "second" are merely for the purpose of description, and cannot be construed as indicating or implying relative importance or implicitly specifying the number of technical features indicated. Therefore, a feature restricted by "first" or "second" may explicitly indicate or implicitly include at least one of the features. In description of the present disclosure, "multiple" means at least two, such as two and three unless otherwise explicitly and specifically defined.

In the present disclosure, unless otherwise explicitly specified and defined, terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two elements, or interaction between two elements, unless otherwise explicitly defined. A person of ordinary skill in the art may understand the specific meanings of the foregoing terms in the present disclosure according to specific situations.

In the present disclosure, unless otherwise explicitly specified or defined, the first feature being located "on" or "below" the second feature may be the first feature directly contacting the second feature, or the first feature indirectly contacting the second feature through an intermediary. In addition, the first feature being "above", "over", or "on" the second feature may indicate that the first feature is directly above or obliquely above the second feature, or may merely indicate that the first feature is at a higher horizontal position than the second feature. The first feature being "below", "under", and "beneath" the second feature may indicate that the first feature is directly below or obliquely below the second feature, or merely indicates that the first feature is at a lower horizontal position than the second feature.

Although the embodiments of the present disclosure have been shown and described above, it may be understood that, the above embodiments are exemplary and should not be understood as a limitation on the present disclosure. A person of ordinary skill in the art may make changes, modifications, replacements, or variations to the above embodiments within the scope of the present disclosure.

## Claims

1. A method for charging a vehicle, comprising:
obtaining a first voltage of a charging port of a vehicle;
determining a target buck value based on the first voltage, adjusting a voltage on a buck side of a buck-boost module of the vehicle based on the target buck value, and sending the target buck value to a charging pile to enable the charging pile to determine an output voltage based on the target buck value; and
increasing a charging demand current of the vehicle to a maximum allowable charging current of the vehicle after the vehicle enters a charging process.

2. The method for charging a vehicle according to claim 1, wherein the determining a target buck value based on the first voltage comprises:
obtaining a maximum allowable charging voltage and a power battery voltage of the vehicle;
determining that the target buck value is a first target voltage when the first voltage is less than or equal to a first preset voltage, to perform buck charging, wherein the first preset voltage is less than a first difference; and the first difference is a difference between the maximum allowable charging voltage and a first preset value;
determining that the target buck value is a second difference when the first voltage is greater than the first preset voltage and less than or equal to the first difference, to perform the buck charging, wherein the second difference is a difference between the first voltage and a second preset value b; and
determining that the target buck value is the power battery voltage when the first voltage is greater than the first difference, to perform fully opened charging.

3. The method for charging a vehicle according to claim 1, before the increasing a charging demand current of the vehicle to a maximum allowable charging current of the vehicle, the method further comprising:
obtaining a maximum allowable output voltage of the charging pile and a power battery voltage and a maximum allowable charging voltage of the vehicle;
increasing the target buck value to a smaller one of a third difference and a fourth difference when the maximum allowable output voltage is less than a smaller one of the maximum allowable charging voltage and a preset voltage threshold, to perform buck charging, wherein the third difference is a difference between the power battery voltage and a fourth preset value; and the fourth difference is a difference between the maximum allowable output voltage and a fifth preset value; and
increasing the target buck value to the power battery voltage when the maximum allowable output voltage is greater than or equal to the smaller one of the maximum allowable charging voltage and the preset voltage threshold, to perform fully opened charging.

4. The method for charging a vehicle according to claim 1 or 3, further comprising:
obtaining a charging current of the vehicle, and adjusting the target buck value based on the charging current.

5. The method for charging a vehicle according to claim 1 or 4, wherein the determining a target buck value based on the first voltage comprises:
determining that the target buck value is a first preset voltage when the first voltage is less than or equal to a first difference, to perform boost charging, wherein the first preset voltage is less than the first difference; and the first difference is a difference between the maximum allowable charging voltage and a first preset value; and
determining that the target buck value is the first preset voltage when the first voltage is greater than the first difference, to perform the boost charging.

6. The method for charging a vehicle according to claim 5, wherein when the first voltage is less than or equal to the first difference, the adjusting the target buck value based on the charging current comprises:
reducing the target buck value by a third preset value to obtain a first target value in a case that the charging current being less than a first preset current occurs and lasts for a first preset time, and maintaining a ratio of a charging demand voltage to the charging demand current of the vehicle unchanged;
increasing the target buck value according to a preset rule when the charging current is greater than a second preset current after the target buck value is reduced to the first target value, to perform the boost charging again; and
reducing a current target buck value by the third preset value in a case that the charging current being less than the first preset current again occurs and lasts for the first preset time after the boost charging is performed again.

7. The method for charging a vehicle according to claim 1 or 3, wherein the determining a target buck value based on the first voltage comprises:
determining that the target buck value is a first preset voltage when the first voltage is less than or equal to a second preset voltage, to perform boost charging, wherein the first preset voltage is less than the second preset voltage;
determining that the target buck value is a smaller one of a second difference and the third difference when the first voltage is greater than the second preset voltage and less than or equal to a first difference, to perform the boost charging, wherein the first difference is a difference between the maximum allowable charging voltage and a first preset value; the second difference is a difference between the first voltage and a second preset value; and the third difference is the difference between the power battery voltage and the fourth preset value; and
determining that the target buck value is the power battery voltage when the first voltage is greater than the first difference, to perform fully opened charging.

8. The method for charging a vehicle according to claim 7, wherein after the boost charging is performed, the adjusting the target buck value based on the charging current comprises:
reducing the target buck value by a third preset value to obtain a second target value in a case that the charging current being less than a first preset current occurs and lasts for a first preset time, and maintaining a ratio of a charging demand voltage to the charging demand current of the vehicle unchanged;
increasing the target buck value according to a preset rule when the charging current is greater than a second preset value after the target buck value is reduced to the second target value, to perform the boost charging again; and
reducing a current target buck value by the third preset value in a case that the charging current being less than the first preset current occurs and lasts for the first preset time after the boost charging is performed again.

9. The method for charging a vehicle according to any of claims 3 to 8, wherein after the fully opened charging is performed, the adjusting the target buck value based on the charging current further comprises:
reducing the target buck value to the first difference in a case that the charging current being less than the first preset current occurs and lasts for the first preset time.

10. The method for charging a vehicle according to any of claims 1 to 9, wherein the first voltage is a maximum voltage of the charging port before transmission of a handshake message between the vehicle and the charging pile stops.

11. A computer-readable storage medium, storing a computer program, the computer program, when executed by a processor, implementing the method for charging a vehicle according to any of claims 1 to 10.

12. A vehicle, comprising an electronic device, the electronic device comprising a memory, a processor, and a computer program stored in the memory, the computer program, when executed by the processor, implementing the method for charging a vehicle according to any of claims 1 to 10.
